# EUROPÄISCHE PATENTSCHRIFT

(11) **EP 2 627 471 B1**
(45) Veröffentlichungstag und Bekanntmachung des Hinweises auf die Patenterteilung: **01.04.2015**
(21) Anmeldenummer: 11770738.0
(22) Anmeldetag: 12.10.2011
(51) Int. Cl.: B23K 26/32, C04B 37/00, C04B 37/02

(54) **VERFAHREN ZUM FÜGEN ZWEIER FÜGEPARTNER, D.H. KERAMIK MIT METALL/KERAMIK, MIT EINEM LASERSTRAHL**
METHOD FOR JOINING TWO PARTNERS TO BE JOINED, I.E. CERAMIC AND METAL/CERAMIC MATERIALS, USING A LASER BEAM
PROCÉDÉ D'ASSEMBLAGE DE DEUX PARTENAIRES D'ASSEMBLAGE, C.-À-D. CÉRAMIQUE ET MÉTAL/CÉRAMIQUE AU MOYEN D'UN FAISCEAU LASER

(30) Priorität: 13.10.2010 DE 102010048193
(43) Veröffentlichungstag der Anmeldung: 21.08.2013
(73) Patentinhaber: CeramTec GmbH, 73207 Plochingen (DE)
(72) Erfinder: DOHN, Alexander, 96117 Memmelsdorf (DE); REISS, Kunibert, 95701 Pechbrunn (DE); THIMM, Alfred, 95632 Wunsiedel (DE)
(74) Vertreter: Scherzberg, Andreas Hans
(86) Internationale Anmeldenummer: PCT/EP2011/067781
(87) Internationale Veröffentlichungsnummer: WO 2012/049200

(56) Entgegenhaltungen:
- DE-A1- 19 848 179
- DE-A1-102007 008 540
- FR-A1- 2 787 737
- JP-A- 2005 307 316
- JP-A- 2007 080 868
- US-A- 4 879 450
- US-A1- 2004 082 145

## Beschreibung

Die Erfindung betrifft ein Verfahren zum Fügen zweier Fügepartner an deren Fügeorten, wobei ein Fügepartner aus einer Keramik und der andere Fügepartner aus einem Metall oder einer Keramik besteht gemäß dem Oberbegriff des Anspruchs 1 (siehe, z.B., JP 2005/307 316 A).

Aus dem Stand der Technik ist aus der Elektronik das Verbinden von Metallen mit Keramik über Metallisierungen bekannt, zum Beispiel vom Dünnfilm über Aktivlot über Dickfilm bis zu Wolframsintermetallisierungen, alle eventuell verstärkt durch galvanische Metallabscheidungen.

Der Erfindung liegt die Aufgabe zugrunde, ein Verfahren nach dem Oberbegriff so zu verbessern, dass es einfach anzuwenden ist und trotzdem eine dauerhaft anhaltende Verbindung schafft.

Erfindungsgemäß wird ein Verfahren gemäß Anspruch 1 vorgeschlagen.

Es kommt je nach der Atmosphäre durch den der Laserstrahl gelenkt wird zur Bildung eines Schmauchs bzw. Reaktionsprodukts. Dieser Schmauch kondensiert zumeist innerhalb des eingeschossenen Schlitzes und verschweisst unerwartet beide Fügepartner. Der vom Laserstrahl eingeschossene Schlitz füllt sich also mit dem Reaktionsprodukt und beide Partner werden fest miteinander verbunden.

Dieses Verfahren wird so zur Verbindung einer Keramik AlN./Aluminium einem Metall verwendet.

Gemäß der Erfindung wird der Laserstrahl auf die Keramik und nicht auf das Metall gerichtet. Hierdurch wird ein weniger starker Laser benötigt. Wenn der Laserstrahl auf den Fügepartner aus Metall gerichtet werden würde, würde das Metall die Energie des Laserstrahls zu schnell ableiten, so dass das Metall am Fügeort auf einer größeren Fläche schmelzen würde.

Vorteilhafterweise werden vom Laserstrahl Schlitze mit einer Länge von 1 bis 5 mm, besonders bevorzugt von 3 mm eingeschossen. Bei diesen Längen der Schlitze ist die Trennkraft der Fügepartner ausreichend. Eine Länge von 3 mm hat sich als besonders zweckmäßig erwiesen. Im Versuch wurde bei einer Länge von 3 mm eine Trennkraft von 50 N erzielt.

Um die Trennkraft auf einer größeren Fläche zu verteilen, wird bevorzugt vom Laserstrahl ein Muster aus einzelnen Schlitzen in die Fügepartner eingeschossen, wobei alle Schlitze entweder Längsschlitze oder senkrecht zu den Längsschlitzen verlaufende Querschlitze bilden.

Zur weiteren Verbesserung der Verteilung der Schlitze wird bevorzugt jeweils einem Längsschlitz ein Querschlitz benachbart eingeschossen. Längsschlitze und Querschlitze wechseln sich dadurch ab und die Trennkraft ist in jeder Richtung gleich groß.

Besonders bevorzugt befinden sich alle Längsschlitze auf zueinander parallel verlaufenden Längsreihen mit festem Abstand zueinander und befinden sich alle Querschlitze auf zueinander parallel verlaufenden Querreihen mit festen Abstand zueinander und jedem Querschlitz wird ein Längsschlitz benachbart eingeschossen. Hierdurch entsteht ein schachbrettartiges Muster, besonders dann, wenn der Abstand zwischen den Längsreihen und den Querreihen gleich ist.

Je nach dem verwendeten Material der Fügepartner wird bevorzugt der Laserstrahl in einer Atmosphäre (Reaktivgas) aus stehender Luft, strömender Luft oder strömendem Stickstoff auf den einen Fügepartner gelenkt.

In bevorzugter Ausführungsform werden für beide Fügepartner ebene Platten verwendet. Ebene Platten lassen sich einfach aufeinander legen, wodurch das Verbinden erleichtert ist.

Der Fügepartner aus Keramik ist gemäß der Erfindung ein Aluminiumnitrid-Substrat mit einer Stärke zwischen 0,5 und 2,0 mm. Diese Stärke wird vom Laserstrahl leicht durchschossen, ist aber dennoch genügend Bruchfest.

Bevorzugt ist die Keramik ein AlN-Substrat und trägt auf der Oberseite eine LED mit vergoldeten Anschlüssen.

Zur Erzeugung des Laserstrahls wird gemäß der Erfindung ein YAG-Laser verwendet.

Beide Fügepartner können aus einer Keramik bestehen, die entweder identisch oder unterschiedlich ist.

Bevorzugte wird dieses Verfahren zum Verbinden von LEDs auf Sockel aus Keramik oder LED-Schaltungen mit einem Gehäuse aus Metall genutzt.

Mit dem erfindunsgemäßen Verfahren wird somit eine Verbindung zwischen planaren oder teilplanaren dünnen Strukturen aus Keramik und Metall wie AlN und Al, thermisch induziert durch kurze Laserimpulse, in einer definierten Atmosphäre aus stehender Luft, strömender Luft oder strömendem Stickstoff geschaffen. Der Laserstrahl durchschießt einen der Fügepartner (bevorzugt den aus Keramik) komplett und bleibt im anderen Fügepartner (Keramik oder Metall) stecken.

Das Verfahren ist besonders für die Verbindung kleiner flächer Fügeteile interessant, wie zum Fügen von LEDs auf Sockel, Fügen von LED-Schaltungen in Gehäuse hinein.

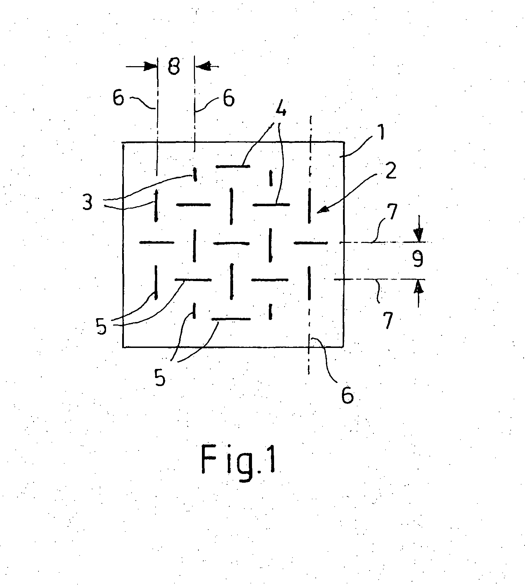

Beispiele :
a) Eine ebene Aluminiumplatte von 0,7 mm Stärke und einer Abmessung von 12*18 mm wird auf ein etwas grösseres ebenes AlN-Substrat von 0,63 mm Stärke gelegt und mit einem YAG-Laser sowohl mit Reaktionsgas als auch ohne (offen an Luft ohne zusätzliches Reaktionsgas) senkrecht auf das AlN-Substrat gelenkt. Das AlN-Substrat trägt auf der Oberseite eine LED samt vergoldeten Anschlüssen. Es wird ein Muster (siehe Figur 1) von kleinen förmigen Schlitzen der Länge 3 mm in die Keramik bis hinunter in die Aluminiumplatte geschlitzt
   Die Schlitze sind nach dem Lasern mit Al-Al2O3-AlN gefüllt, Al und AlN haften zusammen. Die Trennkraft liegt bei 50 N.
b) Wie oben, nur das AlN-Substrat hat eine Stärke von 1,5 mm. Hier wird ein gerichteter Luftstrahl als Reaktivgas verwendet.

Anhand der Figur 1 wird die Erfindung weiter erläutert.

Figur 1 zeigt eine Draufsicht auf einen Fügepartner 1 aus Keramik, d.h. auf den Fügepartner, auf den der Laserstrahl gerichtet wird. Direkt unter dem Fügepartner 1 aus Keramik ist der zweite Fügepartner angeordnet, der nicht gezeigt ist. Erfindungsgemäß wird vom Laserstrahl ein Muster 2 aus einzelnen Schlitzen 5 in die Fügepartner eingeschossen wird, wobei alle Schlitze 5 entweder Längsschlitze 3 oder senkrecht zu den Längsschlitzen 3 verlaufende Querschlitze 4 bilden.

Jeweils einem Längsschlitz 3 ist in der gezeigten Ausführungsform ein Querschlitz 4 benachbart eingeschossen worden bzw. angeordnet.

Alle Längsschlitze 3 befinden sich auf zueinander parallel verlaufenden Längsreihen 6 mit festem Abstand 8 zueinander und alle Querschlitze 4 befinden sich auf zueinander parallel verlaufenden Querreihen 7 mit festen Abstand 9 zueinander und jedem Querschlitz 4 ist ein Längsschlitz 3 benachbart eingeschossen worden. Die Abstände 8 und 9 sind bevorzugt gleich lang.

Es sind auch andere Muster vorteilhaft, welche die Schlitze möglichst gleichmäßig auf der Fläche verteilen.

## Patentansprüche

1. Verfahren zum Fügen zweier Fügepartner an vorgesehenen Fügeorten, wobei ein Fügepartner (1) aus einer Keramik und der andere Fügepartner aus einem Metall oder einer Keramik besteht wobei die Fügepartner einander an den Fügeorten sich berührend angeordnet werden, der Fügepartner (1) aus Keramik ein Atuminiumnitrid-Substrat mit einer Stärke zwischen 0,5 und 2,0 mm ist, und **dadurch gekennzeichnet dass** ein Laserstrahl so auf einen der Fügepartner an den Fügeorten gerichtet wird, dass er diesen Fügepartner durchschießt und zumindest teilweise in den anderen Fügepartner eindringt, wobei der Laserstrahl auf die Keramik gerichtet wird, und wobei zur Erzeugung des Laserstrahls ein YAG-Laser verwendet wird.

2. Verfahren nach Anspruch 1, **dadurch gekennzeichnet, dass** vom Laserstrahl Schlitze (5) mit einer Länge von bevorzugt 1 bis 5 mm, besonders bevorzugt von 3 mm eingeschossen werden.

3. Verfahren nach Anspruch 1 oder 2, **dadurch gekennzeichnet, dass** vom Laserstrahl ein Muster (2) aus einzelnen Schlitzen (5) in die Fügepartner eingeschossen wird, wobei alle Schlitze (5) entweder Längsschlitze (3) oder senkrecht zu den Längsschlitzen (3) verlaufende Querschlitze (4) bilden.

4. Verfahren nach Anspruch 3, **dadurch gekennzeichnet, dass** jeweils einem Längsschlitz (3) ein Querschlitz (4) benachbart eingeschossen wird.

5. Verfahren nach Anspruch 3 oder 4, **dadurch gekennzeichnet, dass** alle Längsschlitze (3) sich auf zueinander parallel verlaufenden Längsreihen (6) mit festem Abstand (8) zueinander befinden und alle Querschlitze (4) sich auf zueinander parallel verlaufenden Querreihen (7) mit festen Abstand (9) zueinander befinden und jedem Querschlitz (4) ein Längsschlitz (3) benachbart eingeschossen wird.

6. Verfahren nach einem der Ansprüche 1 bis 5, **dadurch gekennzeichnet, dass** der andere Fügepartner aus dem Metall Aluminium besteht.

7. Verfahren nach einem der Ansprüche 1 bis 6, **dadurch gekennzeichnet, dass** der Laserstrahl in einer Atmosphäre aus stehender Luft, strömender Luft oder strömendem Stickstoff auf den einen Fügepartner (1) gelenkt wird.

8. Verfahren nach einem der Ansprüche 1 bis 7, **dadurch gekennzeichnet, dass** für beide Fügepartner ebene Platten verwendet werden.

9. Verfahren nach Anspruch 9, **dadurch gekennzeichnet, dass** der Fügepartner aus Metall eine Stärke zwischen 0,5 und 3,0 mm hat.

10. Verfahren nach einem der Ansprüche 1 bis 9, **dadurch gekennzeichnet, dass** die Keramik auf der Oberseite eine LED mit vergoldeten Anschlüssen trägt.

11. Verwendung des Verfahrens nach einem der Ansprüche 1 bis 10 zum Verbinden von LEDs auf Sockel aus Keramik oder LED-Schaltungen mit einem Gehäuse aus Metall.

## Claims

1. A method for joining two partners to be joined at designated joining sites, wherein one partner to be joined (1) consists of a ceramic, and the other partner to be joined consists of a metal or a ceramic, wherein the partners to be joined are arranged so that they touch each other at the joining sites, and the partner to be joined (1) that is of ceramic is an aluminium nitride substrate with a thickness between 0.5 and 2.0 mm, **characterised in that** a laser beam is directed onto one of the partners to be joined at the joining sites so that it shoots through this partner to be joined and at least in part penetrates into the other partner to be joined, wherein the laser beam is directed onto the ceramic, and wherein a YAG laser is used in order to generate the laser beam.

2. A method according to claim 1, **characterised in that** slots (5) with a length of preferably 1 to 5 mm, particularly preferably of 3 mm, are shot in by the laser beam.

3. A method according to claim 1 or 2, **characterised in that** a pattern (2) of individual slots (5) is shot into the partners to be joined by the laser beam, wherein all the slots (5) either constitute longitudinal slots (3) or transverse slots (4) extending perpendicularly to the longitudinal slots (3).

4. A method according to claim 3, **characterised in that** a transverse slot (4) is shot in, in each case, adjacently to a longitudinal slot (3).

5. A method according to claim 3 or 4, **characterised in that** all the longitudinal slots (3) are located in longitudinal rows (6) extending parallel to each other at a fixed distance (8) from each other, and all the transverse slots (4) are located in transverse rows (7) extending parallel to each other at a fixed distance (9) from each other, and a longitudinal slot (3) is shot in adjacently to each transverse slot (4).

6. A method according to one of claims 1 to 5, **characterised in that** the other partner to be joined consists of the metal aluminium.

7. A method according to one of claims 1 to 6, **characterised in that** the laser beam is guided onto the one partner to be joined (1) in an atmosphere of still air, flowing air or flowing nitrogen.

8. A method according to one of claims 1 to 7, **characterised in that** planar plates are used for both partners to be joined.

9. A method according to claim 9, **characterised in that** the partner to be joined that is of metal has a thickness between 0.5 and 3.0 mm.

10. A method according to one of claims 1 to 9, **characterised in that** the ceramic on the top side bears an LED with gold-plated terminals.

11. Use of the method according to one of claims 1 to 10 for connecting LEDs on bases of ceramic or LED circuits with a housing of metal.

## Revendications

1. Procédé d'assemblage de deux partenaires d'assemblage en des points d'assemblage prévus, sachant qu'un partenaire d'assemblage (1) est constitué de céramique et l'autre partenaire d'assemblage est constitué d'un métal ou d'une céramique, sachant que le partenaire d'assemblage (1) en céramique est un substrat en nitrure d'aluminium d'une épaisseur comprise entre 0,5 et 2,0 mm, **caractérisé en ce que** les partenaires d'assemblage sont disposés de manière à être en contact l'un avec l'autre aux points d'assemblage, et un faisceau laser est dirigé sur l'un des partenaires d'assemblage, aux points d'assemblage, de manière à ce qu'il traverse ce partenaire d'assemblage et pénètre au moins partiellement dans l'autre partenaire d'assemblage, sachant que le faisceau laser est dirigé sur la céramique et que l'on utilise un laser YAG pour générer le faisceau laser.

2. Procédé selon la revendication 1, **caractérisé en ce que** le faisceau laser creuse des fentes (5) d'une longueur allant de préférence de 1 à 5 mm et étant de manière particulièrement avantageuse de 3 mm.

3. Procédé selon la revendication 1 ou 2, **caractérisé en ce que** le faisceau laser creuse un motif (2), formé de fentes (5) individuelles, dans les partenaires d'assemblage, sachant que toutes les fentes (5) forment soit des fentes longitudinales (3) soit des fentes transversales (4) s'étendant perpendiculairement aux fentes longitudinales (3).

4. Procédé selon la revendication 3, **caractérisé en ce que** chaque fois une fente transversale (4) est creusée à proximité d'une fente longitudinale (3).

5. Procédé selon la revendication 3 ou 4, **caractérisé en ce que** toutes les fentes longitudinales (3) se situent sur des rangées longitudinales (6) qui s'étendent parallèlement les unes aux autres avec un espacement (8) fixe, et toutes les fentes transversales (4) se situent sur des rangées transversales (7) qui s'étendent parallèlement les unes aux autres avec un espacement (9) fixe, et une fente longitudinale (3) est creusée à proximité de chaque fente transversale (4).

6. Procédé selon l'une des revendications 1 à 5, **caractérisé en ce que** l'autre partenaire d'assemblage est constitué du métal aluminium.

7. Procédé selon l'une des revendications 1 à 6, **caractérisé en ce que** le faisceau laser est dirigé sur l'un (1) des partenaires d'assemblage dans une atmosphère d'air stationnaire, d'air en écoulement ou d'azote en écoulement.

8. Procédé selon l'une des revendications 1 à 7, **caractérisé en ce que** l'on utilise des plaques planes pour les deux partenaires d'assemblage.

9. Procédé selon la revendication 9, **caractérisé en ce que** le partenaire d'assemblage en métal présente une épaisseur comprise entre 0,5 et 3,0 mm.

10. Procédé selon l'une des revendications 1 à 9, **caractérisé en ce que** la céramique porte sur sa face supérieure une DEL avec des bornes dorées.

11. Utilisation du procédé selon l'une des revendications 1 à 10 pour relier des DELs sur socle en céramique ou des circuits à DEL à un boîtier en métal.
